# EUROPÄISCHE PATENTSCHRIFT

(11) **EP 3 569 443 B1**
(45) Veröffentlichungstag und Bekanntmachung des Hinweises auf die Patenterteilung: **26.08.2020**
(21) Anmeldenummer: 19174147.9
(22) Anmeldetag: 13.05.2019
(51) Int. Cl.: B60N 2/54, B60N 2/39, B60N 2/50, B60N 2/02

(54) **FAHRZEUGSITZ MIT EINER FEDEREINRICHTUNG**
VEHICLE SEAT WITH SUPPORTING STRUCTURE
SIÈGE DE VÉHICULE DOTÉ D'UN DISPOSITIF À RESSORT

(30) Priorität: 18.05.2018 DE 102018112004
(43) Veröffentlichungstag der Anmeldung: 20.11.2019
(73) Patentinhaber: Grammer AG, 92224 Amberg (DE)
(72) Erfinder: Haller, Erwin, 92262 Birgland (DE); Irrgang, Andreas, 92421 Schwandorf (DE); Krivenkov, Konstantin, 92224 Amberg (DE)
(74) Vertreter: Hannke, Christian

(56) Entgegenhaltungen:
- WO-A1-88/06984
- WO-A1-2014/176130
- US-A1- 2007 272 818

## Beschreibung

Die Erfindung betrifft einen Fahrzeugsitz mit einer Federeinrichtung zum Federn von Schwenkbewegungen eines Oberteils des Fahrzeugsitzes gegenüber einem Unterteil des Fahrzeugsitzes um eine in einer Fahrzeugsitzlängsrichtung oder Fahrzeugsitzbreitenrichtung verlaufend angeordneten Schwenkachse.

Derartige Fahrzeugsitze sind aus dem Stand der Technik bekannt, beispielsweise aus WO 2014/176130 A1. Hierbei ist ein Fahrzeugsitz erkennbar, welcher um eine Schwenkachse verschwenkbar ist und mittels Feder- bzw. Dämpfungseinrichtungen gegenüber der Karosserie gefedert bzw. gedämpft gelagert ist. Die Anordnung der Federung bzw. Dämpfung ist allerdings sehr platzintensiv.

Es ist demzufolge Aufgabe der vorliegenden Erfindung, die Nachteile des Standes der Technik zu überkommen und einen Fahrzeugsitz zu präsentieren, welcher eine platzsparende sowie konstruktiv und funktional verbesserte Federung gegenüber dem Stand der Technik aufweist.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, einen Fahrzeugsitz mit einer Federeinrichtung zum Federn von Schwenkbewegungen eines Oberteils des Fahrzeugsitzes gegenüber einem Unterteil des Fahrzeugsitzes um eine in einer Fahrzeugsitzlängsrichtung oder Fahrzeugsitzbreitenrichtung verlaufend angeordnete Schwenkachse, wobei ein erster in transversaler Richtung elastisch verformbarer Federstab und die Schwenkachse vorzugsweise in einer gemeinsamen Ebene angeordnet sind, und ein um die Schwenkachse verschwenkbares Verbindungsteil den ersten Federstab und die Schwenkachse verbindet, um bei einer Verschwenkung des Oberteils den ersten Federstab zu verformen.

Insbesondere sind der erste Federstab und das Verbindungsteil Teil der Federeinrichtung.

Besonders bevorzugt ist die gemeinsame Ebene, in welcher die Schwenkachse sowie der erste Federstab angeordnet sein können, die Ebene, die durch die Fahrzeugsitzlängsrichtung sowie einer Fahrzeugsitzbreitenrichtung gebildet wird.

Unter einem Federstab ist hierbei ein Stab zu verstehen, welcher federnde Eigenschaften aufweist und insbesondere in seiner transversalen Richtung elastisch verformbar ist. Durch eine Belastung des Stabes, hervorgerufen durch die elastische Verformung, wird der Federstab zeitlich begrenzt verformt, wodurch Rückführkräfte erzeugt werden, welche den Federstab bei einer Entlastung in seinen Ausgangszustand zurückversetzen. Alternative Formulierungen zu der transversalen Richtung können auch die Formulierungen "Richtung quer zu einer Längsachse des Federstabs" oder "radiale Richtung des Federstabs" verstanden werden.

Erfindungsgemäß ist das Verbindungsteil derart ausgebildet und vorgesehen, den ersten Federstab und die Schwenkachse miteinander zu verbinden. Besonders bevorzugt steht hierbei das Verbindungsteil mit dem Oberteil in Wirkverbindung, das heißt, dass bei einer Schwenkbewegung des Oberteils gegenüber dem Unterteil das Verbindungsteil ebenso um die Schwenkachse verschwenkt wird. Dadurch, dass das Verbindungsteil die Schwenkachse und den ersten Federstab miteinander verbindet, wird bei einer Verschwenkung des Oberteils und einer damit einhergehenden Verschwenkung des Verbindungsteils um die Schwenkachse der erste Federstab deformiert bzw. verformt und entsprechend eine Federung des Oberteils hervorgerufen.

Weiter bevorzugt sind der erste Federstab, die Verbindungseinheit und die Schwenkachse in einer Fahrzeugsitzhöhenrichtung gesehen zwischen dem Oberteil und dem Unterteil angeordnet. Hierdurch kann eine weitere Platzreduzierung vorgenommen werden.

Gemäß einer bevorzugten Ausführungsform ist die Schwenkachse vorzugsweise als eine Lagerachse ausgebildet und die Schwenkachse weist ein erstes Ende und ein zweites Ende auf, wobei das erste Ende und das zweite Ende der Lagerachse mit dem Federungsunterteil nicht drehbar verbunden sind.

Es ist ebenso denkbar, dass die Schwenkachse als eine Lagerwelle ausgebildet ist, das heißt, insbesondere eben drehbar gelagert ist.

Weiter vorzugsweise sind ein erster Lagerbock und ein zweiter Lagerbock vorgesehen, welche jeweils mit dem Unterteil starr verbunden sind und der erste Lagerbock das erste Ende der Schwenkachse und der zweite Lagerbock das zweite Ende der Schwenkachse drehbar oder nicht drehbar lagert, je nachdem ob die Schwenkachse als Lagerachse oder als Lagerwelle ausgebildet ist.

Gemäß einer weiteren bevorzugten Ausführungsform weist der erste Federstab ein erstes Ende und ein zweites Ende auf, wobei das erste Ende des ersten Federstabs und das zweite Ende des Federstabs mit dem Federungsunterteil verbunden sind, insbesondere starr verbunden sind. Dadurch kann eine wesentlich höhere Steifigkeit erreicht werden. Ebenso wird durch eine starre Verbindung auch ausgeschlossen, dass bei einer Verformung des ersten Federstabs unerwünschte Drehbewegungen des ersten Federstabs auftreten können und zu unerwünschten Effekten hinsichtlich der Federeigenschaften führen.

Weiter bevorzugt ist das erste Ende des ersten Federstabs mit dem ersten Lagerbock und das zweite Ende des ersten Federstabs mit dem zweiten Lagerbock verbunden.

Gemäß einer weiteren bevorzugten Ausführungsform ist das Verbindungsteil mit der Schwenkachse derart verbunden, dass bei einer Drehung der Schwenkachse das Verbindungsteil entlang der Schwenkachse verschiebbar ist.

Denkbar ist hierbei beispielsweise, dass die Schwenkachse bzw. die Lagerwelle als eine Drehspindel ausgebildet ist und das Verbindungsteil entsprechend zugehörig komplementär ausgebildet ist. Durch Drehung der Drehspindel wird das Verbindungsteil entlang der Drehspindel verlagert, insbesondere translatorisch verlagert.

Alternativ kann das Verbindungsteil durch Beaufschlagung eines Zugs oder Drucks in Richtung der Schwenkachse verschoben werden, beispielsweise durch Verwendung von entsprechenden pneumatischen Zylindern, Bowdenzügen, oder dergleichen.

Alternativ kann daher das Verbindungsteil auch als eine Laufkatze bezeichnet werden.

Durch die Verschiebung des Verbindungsteils bzw. der Laufkatze wird auf einer Seite der Abstand des Verbindungsteils zu einem Ende der Schwenkachse bzw. zu einem Lagerbock kleiner, wodurch die Federungseigenschaften des ersten Federstabs sich verändern. Insgesamt kann also durch Anpassung der Position des Verbindungsteils auf der Schwenkachse die Federungseigenschaften der Federeinrichtung verändert werden.

Gemäß einer besonders bevorzugten Ausführungsform weist die Federeinrichtung einen zweiten in transversaler Richtung elastisch verformbaren Federstab auf, welcher ein erstes Ende und ein zweites Ende aufweist, wobei das erste Ende des zweiten Federstabs und das zweite Ende des zweiten Federstabs mit dem Federungsunterteil verbunden sind und das Verbindungsteil den zweiten Federstab und die Schwenkachse verbindet.

Die Ausführungen, betreffend den ersten Federstab, können ebenso auf den zweiten Federstab zutreffen. Insbesondere liegt der zweite Federstab ebenso in der gemeinsamen Ebene.

Dadurch, dass ein erster Federstab und ein zweiter Federstab vorgesehen sein können, können die Federungseigenschaften der Federeinrichtung noch besser eingestellt werden. Ebenso ändert sich die Federrate der Federeinrichtung.

Gemäß einer weiteren bevorzugten Ausführungsform weisen das erste Ende des ersten Federstabs und das erste Ende des zweiten Federstabs einen ersten Abstand zueinander und das zweite Ende des ersten Federstabs und das zweite Ende des zweiten Federstabs einen zweiten Abstand zueinander auf, wobei der erste Abstand kleiner ist als der zweite Abstand.

Dies hat insbesondere zur Folge, dass zumindest ein Federstab in einem Winkel zu der Schwenkachse angeordnet ist. Es kann jedoch auch sein, dass der erste Federstab und der zweite Federstab jeweils in einem Winkel zu der Schwenkachse angeordnet sind, insbesondere können der erste und der zweite Federstab symmetrisch zu der Schwenkachse angeordnet sein.

Gemäß einer weiteren bevorzugten Ausführungsform weist das Verbindungsteil einen ersten Durchgang und gegebenenfalls einen zweiten Durchgang auf, durch welche der erste Federstab und gegebenenfalls der zweite Federstab verlaufen. Bei einer Fahrt über sehr unebenes Terrain wird die Federeinrichtung starken Wechselbelastungen ausgesetzt. Dabei kann es durchaus sein, dass die Durchgänge des Verbindungsteils mit der Zeit ausschlagen und es zu einem unerwünschten Spiel in der Federung kommt. Dadurch, dass die Enden der Federstäbe in verschiedenen Abständen zueinander angeordnet sind, also die Federstäbe keilförmig zueinander verlaufen jedoch der Durchgangsabstand in dem Verbindungsteil konstant ist, verlaufen die Federungsstäbe bis zu dem Verbindungsteil im Wesentlichen parallel und nach dem Verbindungsteil nicht parallel. Hierdurch üben die Federstäbe eine seitliche Kraft auf die Durchgänge des Verbindungsteils aus, so dass entstehendes Spiel nicht bemerkbar ist.

Gemäß einer weiteren bevorzugten Ausführungsform weist das Verbindungsteil eine wippenähnliche Struktur auf, wobei an einem ersten Ende der wippenähnlichen Struktur ein erstes Wippenelement und an dem zweiten Ende der wippenähnlichen Struktur ein zweites Wippenelement angeordnet ist, wobei zumindest das erste Wippenelement und das zweite Wippenelement mit dem Oberteil in Wirkkontakt stehen.

Durch diese wippenähnliche Ausgestaltung des Verbindungsteils kann das Verbindungsteil der Schwenkbewegung besonders gut folgen.

Insbesondere ist es vorteilhaft, wenn das Verbindungsteil mit wippenähnlicher Struktur einen Wippenpunkt aufweist, welcher in Höhenrichtung gesehen senkrecht unterhalb der Schwenkachse angeordnet ist und mit dem Unterteil in Wirkverbindung steht. Durch den Wippenpunkt, welcher mit dem Unterteil in Wirkverbindung steht, ist demnach das Verbindungsteil sowohl mit dem Oberteil als auch dem Unterteil in Wirkkontakt, wodurch das Verbindungsteil besonders gut der Schwenkbewegung des Oberteils gegenüber dem Unterteil folgen kann.

Gemäß einer weiteren bevorzugten Ausführungsform weisen das erste Wippenelement und das zweite Wippenelement jeweils einen ersten Bereich, welcher im Querschnitt trapezförmig ausgebildet ist, und einen zweiten Bereich, welcher im Querschnitt rechteckig ausgebildet ist, auf. Vorteilhaft ist der erste Bereich in Höhenrichtung gesehen unterhalb des zweiten Bereichs angeordnet.

Durch die trapezförmige Ausgestaltung wird ein Endanschlag des Verbindungsteils definiert, dadurch, dass wenn das Verbindungsteil so weit um die Schwenkachse verschwenkt wird, dass eine Seite, welche als Eckpunkt den Wippenpunkt aufweist, mit dem Unterteil in Verbindung steht. Vorzugsweise verlaufen die zueinander parallel verlaufenden Seiten des Trapezes in Höhenrichtung.

Gemäß einer weiteren bevorzugten Ausführungsform umfasst der Fahrzeugsitz eine Horizontalfederung, wobei in der Höhenrichtung gesehen die Horizontalfederung unterhalb der Federeinrichtung angeordnet ist. Bei der Horizontalfederung kann es sich um eine Horizontalfederung handeln, welche in Fahrzeugsitzlängsrichtung oder in Fahrzeugsitzbreitenrichtung wirkt.

Denn wenn die Horizontalfederung oberhalb der Federeinrichtung angeordnet wäre, könnte es passieren, dass sich der Schwerpunkt zu weit nach außen verlagert und hierdurch die Federeinrichtung, insbesondere die jeweiligen Elemente der Federeinrichtung, zu stark belastet werden würden.

Gemäß einer weiteren bevorzugten Ausführungsform weist der Fahrzeugsitz eine Dämpfungseinrichtung mit mindestens einem Dämpfer auf, welcher mit einem ersten Ende mit dem Unterteil und mit einem zweiten Ende mit dem Oberteil schwenkbar verbunden ist.

Hierdurch ist es zusätzlich zu der Federung der Schwenkbewegungen des Oberteils möglich, auch eine Dämpfung der Schwenkbewegungen zu erreichen.

Besonders bevorzugt ist ein erstes Hebelelement vorgesehen, welches mit einem ersten Ende schwenkbar mit dem Unterteil und mit einem zweiten Ende schwenkbar mit dem zweiten Ende des Dämpfers verbunden ist, und dass ein zweites Hebelelement vorgesehen ist, welches mit dem ersten Hebelelement schwenkbar verbunden ist.

Durch eine derartige Anordnung kann der Platzbedarf der Dämpfungseinrichtung ebenfalls weiter gesenkt werden. Außerdem kann durch die Geometrie der Hebelelemente die auf das Oberteil wirkende Dämpfungskraft beeinflusst werden. Insbesondere ermöglicht das aus dem ersten und zweiten Hebelelement bestehende Koppelgetriebe eine bedarfsgerechte Anpassung der Dämpfereigenschaften.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: Fahrzeugsitz gemäß einer bevorzugten Ausführungsform in einem normalen Betriebszustand;
- Fig. 1B: Fahrzeugsitz gemäß Figur 1A in einem ausgelenkten Betriebszustand;
- Fig. 2A: Federungseinrichtung des Fahrzeugsitzes in dem normalen Betriebszustand in einer Draufsicht;
- Fig. 2B: Federungseinrichtung gemäß Figur 2A gemäß Schnitt A - A;
- Fig. 2C: Ausschnittvergrößerung B der Figur 2B;
- Fig. 2D: Federungseinrichtung gemäß Figur 2A in einer Vorderansicht;
- Fig. 3A: Federungseinrichtung gemäß Figur 2A in einem ausgelenkten Betriebszustand;
- Fig. 3B: Ausschnittvergrößerung D der Figur 3A;
- Fig. 3C: Federungseinrichtung gemäß Figur 3A in einer Vorderansicht;
- Fig. 4: Federungseinrichtung in einer weiteren Draufsicht;
- Fig. 5A: Federungseinrichtung mit verschiebbarem Verbindungsteil in einer perspektivischen Ansicht;
- Fig. 5B: Federungsvorrichtung gemäß Figur 5A in einer Draufsicht.

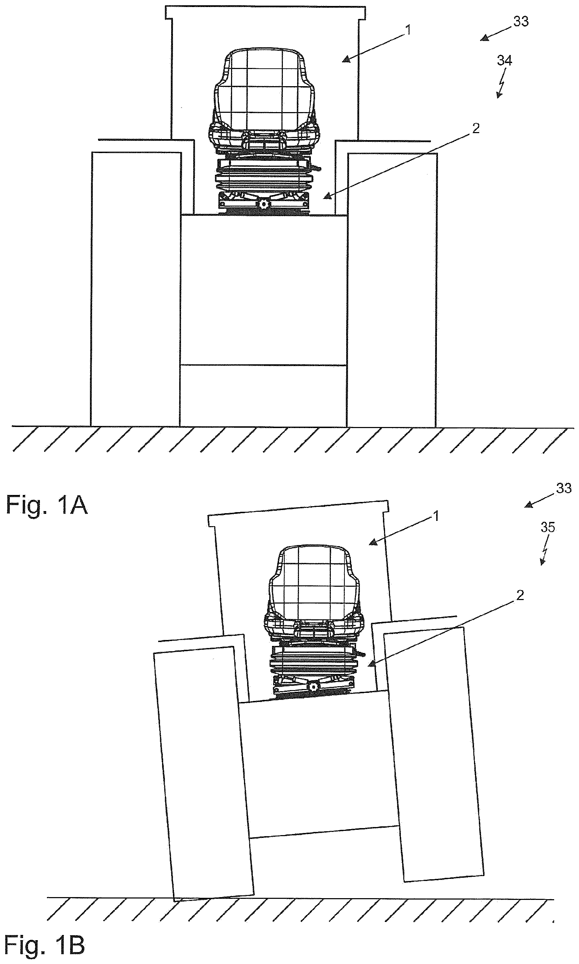

In der Figur 1A ist ein erfindungsgemäßer Fahrzeugsitz 1 zu erkennen, welcher in einer Kabine eines Fahrzeugs 33 montiert ist. Das Fahrzeug 33 und entsprechend der Fahrzeugsitz 1 sind in einem normalen Betriebszustand 34, das heißt, das Fahrzeug 33 bzw. der Fahrzeugsitz 1 sind nicht ausgelenkt.

In der Figur 1B ist der Fahrzeugsitz 1 der Figur 1A zu erkennen, wobei hier das Fahrzeug 33 bzw. der Fahrzeugsitz 1 sich in einem ausgelenkten Betriebszustand 35 befinden. Insbesondere wird das Fahrzeug 33 lediglich auf einer Seite ausgelenkt, vorliegend betrachtet die rechte Seite.

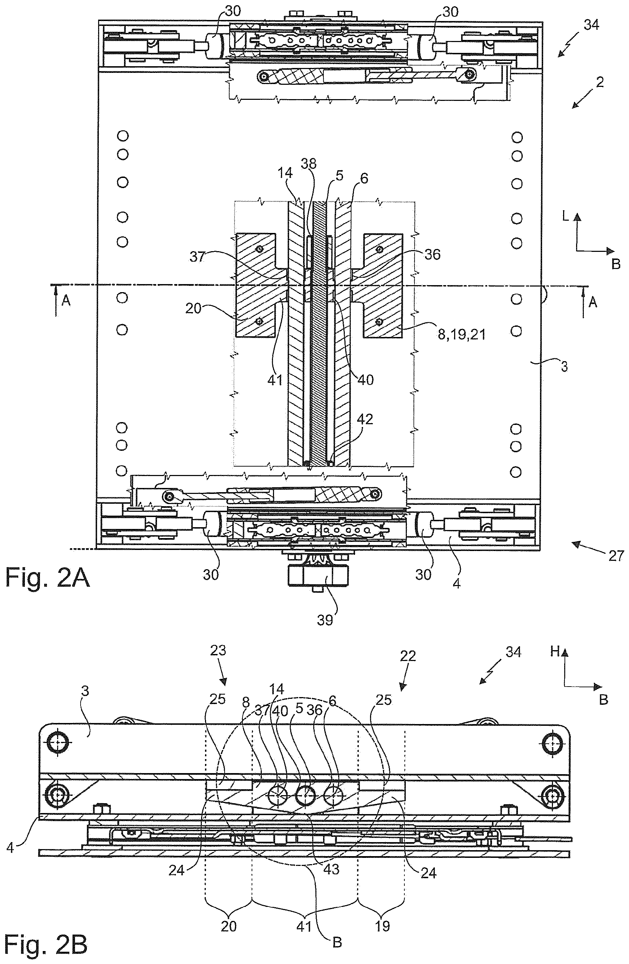

Die Figur 2A zeigt dabei eine erfindungsgemäße Federungsvorrichtung 2 eines Fahrzeugsitzes 1 gemäß einer bevorzugten Ausführungsform in einer Draufsicht.

Es ist ein Verbindungsteil 8 vorgesehen, welches einen ersten Durchgang 36 und einen zweiten Durchgang 37 aufweist, wobei sich ein erster Federstab 6 durch den ersten Durchgang 36 und ein zweiter Federstab 14 sich durch den zweiten Durchgang 37 erstreckt. Die Durchgänge 36, 37 erstrecken sich hierbei in einer Fahrzeugsitzlängsrichtung L. Weiter ist ein dritter Durchgang 40 zu erkennen, durch welchen sich die Schwenkachse 5 erstreckt, wobei die Schwenkachse 5 mit dem Verbindungsteil 8 in Wirkverbindung steht. Es ist dabei auch denkbar, dass die Durchgänge 36, 37 in Fahrzeugsitzbreitenrichtung B verlaufend angeordnet sind.

Weiter ist das Verbindungsteil 8 mit einer wippenähnlichen Struktur 21 umfassend ein erstes Wippenelement 19 und ein zweites Wippenelement 20, welche durch ein Mittelelement 41 miteinander verbunden sind. Insbesondere weist das Mittelelement 41 Durchgänge 36, 37, 40 auf.

Weiter weist die Federungsvorrichtung 2 einen Drehknopf 39 auf, welcher mit der Schwenkachse 5 verbunden ist. Durch Betätigung des Drehknopfes 39, das heißt durch Drehung des Drehknopfes wird ebenso die Schwenkachse 5 um ihre eigene Achse gedreht. Durch Drehung der Schwenkachse 5 wird dabei das Verbindungsteil 8 in Fahrzeugsitzlängsrichtung L nach hinten oder nach vorne verlagert, wodurch die Federeigenschaften der Federeinrichtung 2 einstellbar sind.

Bezüglich dieser Verlagerung des Verbindungsteils 8 in Fahrzeugsitzlängsrichtung L oder Fahrzeugsitzbreitenrichtung B sind ein erstes Stoppelement 38 und ein zweites Stoppelement 42 vorgesehen, welche die Verlagerung des Verbindungsteils 8 in Fahrzeugsitzlängsrichtung L oder Fahrzeugsitzbreitenrichtung B begrenzen.

Insbesondere ist das erste Stoppelement 38 derart angeordnet, so dass das Verbindungselement 8 beim Erreichen des ersten Stoppelements 38 in einer Mittellage positioniert ist, das heißt, dass das Verbindungsteil 8 symmetrisch der Mitte des Oberteils 3 ist, wobei die Mitte in Fahrzeugsitzlängsrichtung L gemeint ist.

Weiter ist eine Dämpfungseinrichtung 27 der Figur 2A zu entnehmen, mit einem Dämpfer 30, wobei hier mehrere Dämpfer 30 vorgesehen sind.

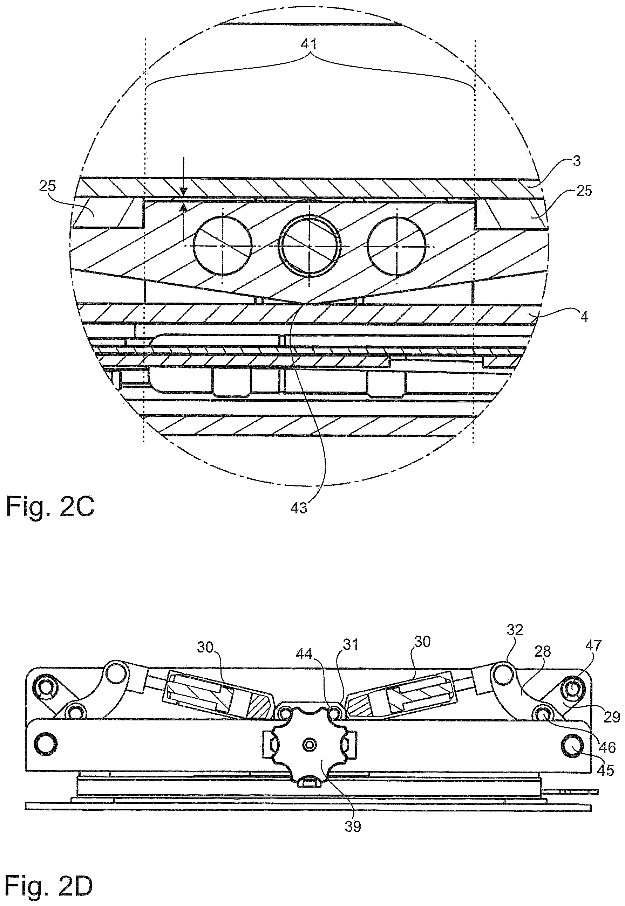

Die Figur 2B zeigt den Schnitt A-A, welcher in der Figur 2A eingezeichnet ist. Die Figur 2C zeigt einen Ausschnitt B der Figur 2B in einer Vergrößerung. Figur 2D zeigt eine Vorderansicht der Figur 2A.

Näher eingehend auf die Figur 2B ist ein Querschnitt durch das Verbindungsteil 8 dargestellt, und wobei das Verbindungsteil 8 eine wippenähnliche Struktur 21 aufweist, mit einem ersten Ende 22 und einem zweiten Ende 23. An dem ersten Ende 22 der Struktur 21 ist ein erstes Wippenelement 19 und an dem zweiten Ende 23 der Struktur ein zweites Wippenelement 20 angeordnet. Jedes Wippenelement 19, 20 weist einen trapezförmigen Bereich 24 und einen rechteckigen Bereich 25 auf, wobei sich diese Ausgestaltung (Trapez, Rechteck) auf den dargestellten Querschnitt bezieht. Darüber hinaus ist der rechteckige Bereich 25 jeweils in Fahrzeugsitzhöhenrichtung H gesehen über dem trapezförmigen Bereich 24 angeordnet und steht mit dem Oberteil 3 in Wirkkontakt.

Das Mittelelement 41 weist den ersten Durchgang 36, den zweiten Durchgang 37 sowie den dritten Durchgang 40 auf, wobei der erste Federstab 6 sich durch den ersten Durchgang 36, der zweite Federstab 14 sich durch den zweiten Durchgang und die Schwenkachse 5 sich durch den dritten Durchgang 40 erstreckt.

Das Mittelelement umfasst auch einen Wippenpunkt 43, mittels welchem das Verbindungsteil 8 mit dem Unterteil 4 wirkverbunden ist.

In der Ausschnittsvergrößerung B der Figur 2B, dargestellt in der Figur 2C, ist zu sehen, dass das Mittelelement 41 mit dem Oberteil 3 nicht in Wirkkontakt steht, sondern lediglich das erste Wippenelement 19 und das zweite Wippenelement 20, insbesondere der rechteckige Bereich 25. Der rechteckige Bereich 25 kann dabei aus verschiedenen Materialien gefertigt sein, beispielsweise aus einem Material mit geringen Federungs- und Dämpfungseigenschaften. Besonders bevorzugt handelt es sich bei dem Material um ein gleitfähiges Material.

Die Figur 2D zeigt eine Vorderansicht der Federeinrichtung 2, wobei eine Dämpfungseinrichtung vorgesehen ist mit einem ersten Dämpfer 30 mit einem ersten Ende 31 und einem zweiten Ende 32 umfasst, wobei das erste Ende 31 schwenkbar mittels einer ersten Schwenkachse 44 mit dem Unterteil 4 verbunden ist und das zweite Ende 32 mit einem ersten Hebelelement 28 verbunden ist, wobei das erste Hebelelement 28 schwenkbar mittels einer zweiten Schwenkachse 45 mit dem Unterteil 4 verbunden ist und ein zweites Hebelelement 29 vorgesehen ist, welches schwenkbar mittels einer dritten Schwenkachse 46 mit dem ersten Hebelelement 28 und schwenkbar mittels einer vierten Schwenkachse 47 mit dem Oberteil 3 verbunden ist.

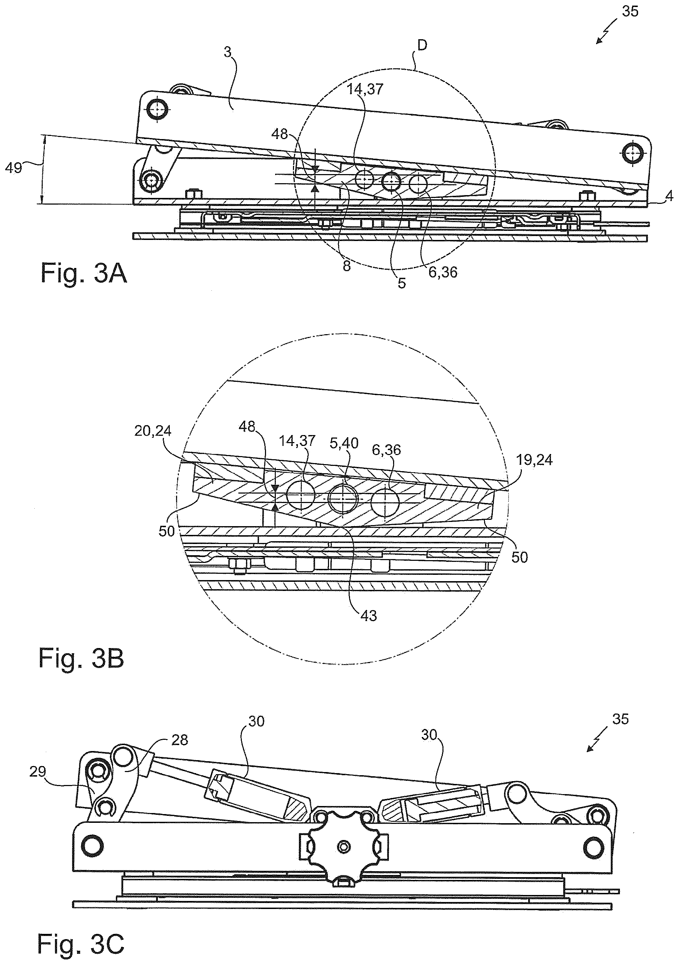

Die Figur 3A zeigt die Federeinrichtung 2 in einem ausgelenkten Betriebszustand 35, das heißt, dass das Oberteil 3 eine Schwenkbewegung gegenüber dem Unterteil 4 durchführt. Da hierbei das Verbindungsteil 8 in Wirkkontakt einerseits mit dem Oberteil 3 steht, wird ebenso das Verbindungsteil 8 um die Schwenkachse 5 verschwenkt. Dies hat zur Folge, dass ebenso die Durchgänge 36, 37 um die Schwenkachse 5 verschwenkt werden und konsequenterweise auch der erste Federstab 6 und der zweite Federstab 14; mitunter werden die Federstäbe 6, 14 hierbei elastisch deformiert. Ebenso steht das Verbindungsteil 8 mittels dem Wippenpunkt 43 mit dem Unterteil 4 in Wirkkontakt, so dass das Verbindungsteil 8 um diesen Wippenpunkt 43 geschwenkt wird.

Waren im normalen Betriebszustand 34 das Oberteil 3 und das Unterteil 4 im Wesentlichen parallel zueinander angeordnet, so schließen das Oberteil 3 und das Unterteil 4 im ausgelenkten Betriebszustand 35 nun einen Winkel 49 ein und der erste Federstab 6 und der zweite Federstab 14 sind nun um einen Wert einer Auslenkung 48 in Fahrzeugsitzhöhenrichtung H zueinander verschoben.

Die Figur 3B zeigt eine Vergrößerung des Bereiches B der Figur 3A. Insbesondere die Auslenkung des ersten Federstabs 6 zu dem zweiten Federstab 14 ist hierbei noch besser zu erkennen. Die Schwenkachse 5 wird in ihrer Position bzw. Lage nicht verändert durch die Schwenkbewegung.

Weiter ist eine Seite 50 des trapezförmigen Bereichs 24 des ersten Wippenelements 19 zu erkennen, welche den Wippenpunkt 43 umfasst und welche als Begrenzung der Schwenkbewegung des Oberteils 3 fungieren kann. Steht die Seite 50 mit dem Unterteil 4 in Kontakt, so ist ein weiteres Verschwenken des Oberteils 3 gegenüber dem Unterteil 4 in diese Richtung nicht mehr möglich. Gleiches gilt natürlich für den weiteren trapezförmigen Bereich 24 des zweiten Wippenelements 20.

Die Figur 3C zeigt ebenso wie die Figur 2D eine Vorderansicht der Federeinrichtung 2, jedoch in dem ausgelenkten Betriebszustand 35. Der Figur 3C ist dabei insbesondere gut die Bewegung des ersten Hebelelements 28 und des zweiten Hebelelements 29 zu erkennen.

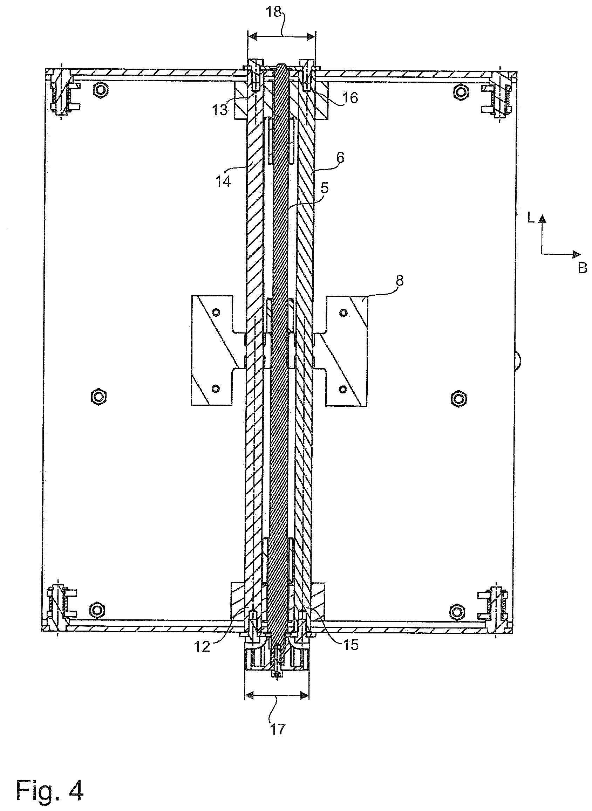

Die Figur 4 zeigt eine besonders bevorzugte Ausgestaltungsmöglichkeit der Federeinrichtung 2, wobei das erste Ende 12 des ersten Federstabs 6 und das erste Ende 15 des zweiten Federstabs 14 in einem ersten Abstand 17 und das zweite Ende 13 des ersten Federstabs 6 und das zweite Ende 16 des zweiten Federstabs 14 in einem zweiten Abstand 18 zueinander angeordnet sind. Der jeweilige Abstand 17, 18 wird hierbei in Fahrzeugsitzbreitenrichtung B oder Fahrzeugsitzlängsrichtung L angesetzt gemessen. Außerdem wird der jeweilige Abstand 17, 18 von den am weitesten voneinander entfernten Punkten der Federstäbe 6, 14 gemessen. Der erste Abstand 17 ist kleiner als der zweite Abstand 18, das heißt insbesondere, dass die Federstäbe 6, 14 nicht parallel zueinander verlaufen, sondern in einem Winkel zueinander.

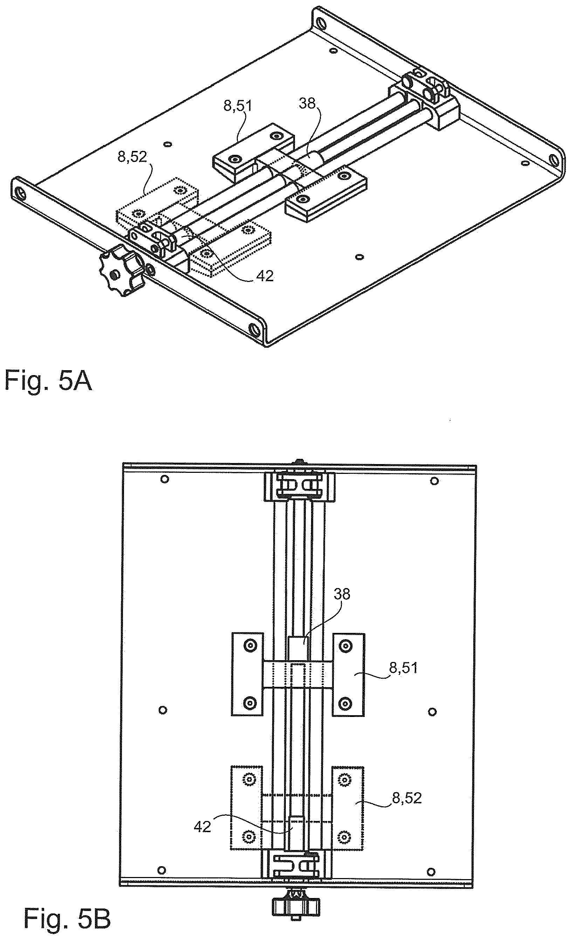

Die Figuren 5A und 5B zeigen das Verbindungsteil 8 in der Mittellage 51 und in einer verschobenen Lage 52, wobei die verschobene Lage 52 gepunktet dargestellt ist. Die Figur 5A ist eine perspektivische Ansicht, die Figur 5B eine Draufsicht.

Die Mittellage 51 sowie die verschobene Lage 52 sind die Maximallagen des Verbindungsteils 8, das heißt, dass das Verbindungsteil 8 nur noch Positionen zwischen der Mittellage 51 und der verschobenen Lage 52 einnehmen kann, insbesondere stufenlos. Begrenzt wird die Verlagerung des Verbindungsteils 8 durch ein erstes Stoppelement 38 und ein zweites Stoppelement 42.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Federeinrichtung
- 3: Oberteil
- 4: Unterteil
- 5: Schwenkachse
- 6: erster Federstab
- 7: Ebene
- 8: Verbindungsteil
- 9: Lagerwelle
- 10: erstes Ende der Schwenkachse
- 11: zweites Ende der Schwenkachse
- 12: erstes Ende des ersten Federstabs
- 13: zweites Ende des ersten Federstabs
- 14: zweiter Federstab
- 15: erstes Ende des zweiten Federstabs
- 16: zweites Ende des zweiten Federstabs
- 17: erster Abstand
- 18: zweiter Abstand
- 19: erstes Wippenelement
- 20: zweites Wippenelement
- 21: wippenähnliche Struktur
- 22: erstes Ende der wippenähnlichen Struktur
- 23: zweites Ende der wippenähnlichen Struktur
- 24: trapezförmiger Bereich
- 25: rechteckiger Bereich
- 26: Horizontalfederung
- 27: Dämpfungseinrichtung
- 28: erstes Hebelelement
- 29: zweites Hebelelement
- 30: Dämpfer
- 31: erstes Ende des Dämpfers
- 32: zweites Ende des Dämpfers
- 33: Fahrzeug
- 34: normaler Betriebszustand
- 35: ausgelenkter Betriebszustand
- 36: erster Durchgang
- 37: zweiter Durchgang
- 38: erstes Stoppelement
- 39: Drehknopf
- 40: dritter Durchgang
- 41: Mittelelement
- 42: zweites Stoppelement
- 43: Wippenpunkt
- 44: erste Schwenkachse
- 45: zweite Schwenkachse
- 46: dritte Schwenkachse
- 47: vierte Schwenkachse
- 48: Auslenkung
- 49: Winkel
- 50: Seite
- 51: Mittellage
- 52: verschobene Lage

## Patentansprüche

1. Fahrzeugsitz (1) mit einer Federeinrichtung (2) zum Federn von Schwenkbewegungen eines Oberteils (3) des Fahrzeugsitzes (1) gegenüber einem Unterteil (4) des Fahrzeugsitzes (2) um eine in einer Fahrzeugsitzlängsrichtung (L) oder Fahrzeugsitzbreitenrichtung (B) verlaufend angeordnete Schwenkachse (5),
**dadurch gekennzeichnet, dass**
die Federeinrichtung (2) einen ersten in transversaler Richtung elastisch verformbaren Federstab (6) aufweist und ein um die Schwenkachse (5) verschwenkbares Verbindungsteil (8) den ersten Federstab (6) und die Schwenkachse (5) verbindet, um bei einer Verschwenkung des Oberteils (3) den ersten Federstab (6) elastisch zu verformen.

2. Fahrzeugsitz (1) nach Anspruch 1,
**dadurch gekennzeichnet, dass**
die Schwenkachse (5) vorzugsweise als eine Lagerachse ausgebildet ist und die Schwenkachse (5) ein erstes Ende (10) und ein zweites Ende (11) aufweist, wobei das erste Ende (10) und das zweite Ende (11) mit dem Federungsunterteil (4) drehbar verbunden sind.

3. Fahrzeugsitz (1) nach Anspruch 1 oder 2,
**dadurch gekennzeichnet, dass**
der erste Federstab (6) ein erstes Ende (12) und ein zweites Ende (13) aufweist, wobei das erste Ende (12) und das zweite Ende (13) mit dem Federungsunterteil (4) verbunden sind.

4. Fahrzeugsitz (1) nach einem der Ansprüche 1-3,
**dadurch gekennzeichnet, dass**
das Verbindungsteil (8) mit der Schwenkachse (5) derart verbunden ist, dass bei einer Drehung der Schwenkachse (5) das Verbindungsteil (8) entlang der Schwenkachse (5) verlagerbar ist.

5. Fahrzeugsitz (1) nach einem der Ansprüche 1-4,
**dadurch gekennzeichnet, dass**
die Federungseinrichtung (2) einen zweiten in transversaler Richtung verformbaren Federstab (14) umfasst, welcher ein erstes Ende (15) und ein zweites Ende (16) aufweist, wobei das erste Ende (15) und das zweite Ende (16) mit dem Federungsunterteil (4) verbunden sind und das Verbindungsteil (8) den zweiten Federstab (14) und die Schwenkachse (5) verbindet.

6. Fahrzeugsitz (1) nach Anspruch 5,
**dadurch gekennzeichnet, dass**
das erste Ende (13) des ersten Federstabs (6) und das erste Ende (13) des zweiten Federstabs (14) einen ersten Abstand (17) zueinander und das zweite Ende des ersten Federstabs (13) und das zweite Ende (16) des zweiten Federstabs (14) einen zweiten Abstand (18) zueinander aufweisen, wobei der erste Abstand (17) kleiner als der zweite Abstand (18) ist.

7. Fahrzeugsitz (1) nach einem der Ansprüche 1-6,
**dadurch gekennzeichnet, dass**
das Verbindungsteil (8) eine wippenähnliche Struktur (21) aufweist, wobei an einem ersten Ende (22) der wippenähnlichen Struktur (21) ein erstes Wippenelement (19) und an einem zweiten Ende (23) der wippenähnlichen Struktur (21) ein zweites Wippenelement (20) angeordnet sind, wobei das erste Wippenelement (19) und das zweite Wippenelement (20) mit dem Oberteil (3) in Wirkkontakt stehen.

8. Fahrzeugsitz (1) nach Anspruch 7,
**dadurch gekennzeichnet, dass**
das erste Wippenelement (19) und das zweite Wippenelement (20) jeweils einen ersten Bereich (24), welcher im Querschnitt trapezförmig ausgebildet ist, und einen zweiten Bereich (25), welcher im Querschnitt rechteckig ausgebildet ist, aufweisen.

9. Fahrzeugsitz (1) nach einem der Ansprüche 1-8,
**dadurch gekennzeichnet, dass**
der Fahrzeugsitz (1) eine Längshorizontalfederung (26) umfasst, wobei in einer Fahrzeugsitzhöhenrichtung (H) gesehen die Längshorizontalfederung (26) unterhalb der Federeinrichtung (2) angeordnet ist.

10. Fahrzeugsitz (1) nach einem der Ansprüche 1-9,
**dadurch gekennzeichnet, dass**
der Fahrzeugsitz (1) eine Dämpfungseinrichtung (27) mit mindestens einen Dämpfer (30) aufweist, welcher mit einem ersten Ende (31) mit dem Unterteil (4) und mit einem zweiten Ende (32) mit dem Oberteil (3) schwenkbar verbunden ist.

11. Fahrzeugsitz (1) nach Anspruch 10,
**dadurch gekennzeichnet, dass**
mindestens ein erstes Hebelelement (28) vorgesehen ist, welches mit einem ersten Ende schwenkbar mit dem Unterteil (4) und mit einem zweiten Ende schwenkbar mit dem zweiten Ende des Dämpfers (32) verbunden ist, und dass mindestens ein zweites Hebelelement (29) vorgesehen ist, welches mit dem ersten Hebelelement (28) schwenkbar verbunden ist.

12. Fahrzeugsitz (1) nach einem der vorhergehenden Ansprüche,
**dadurch gekennzeichnet, dass**
der erste Federstab (6) und die Schwenkachse (5) in einer gemeinsamen Ebene (7) angeordnet sind.

## Claims

1. Vehicle seat (1) with a suspension device (2) for suspending pivoting movements of an upper part (3) of the vehicle seat (1) relative to a lower part (4) of the vehicle seat (2) about a pivot axis (5) which runs in a vehicle seat longitudinal direction (L) or a vehicle seat width direction (B),
**characterised in that**
the suspension device (2) has a first spring rod (6) which is elastically deformable in the transverse direction and a connecting part (8), pivotable about the pivot axis (5), connects the first spring rod (6) and the pivot axis (5) in order to elastically deform the first spring rod (6) upon pivoting of the upper part (3).

2. Vehicle seat (1) according to claim 1,
**characterised in that**
the pivot axis (5) is preferably formed as a bearing axis and the pivot axis (5) has a first end (10) and a second end (11), wherein the first end (10) and the second end (11) are rotatably connected to the lower suspension part (4).

3. Vehicle seat (1) according to either claim 1 or 2,
**characterised in that**
the first spring rod (6) has a first end (12) and a second end (13), wherein the first end (12) and the second end (13) are connected to the lower suspension part (4).

4. Vehicle seat (1) according to any of claims 1-3,
**characterised in that**
the connecting part (8) is connected to the pivot axis (5) such that, upon rotation of the pivot axis (5), the connecting part (8) is displaceable along the pivot axis (5).

5. Vehicle seat (1) according to any of claims 1-4,
**characterised in that**
the suspension device (2) comprises a second spring rod (14) which is deformable in the transverse direction, having a first end (15) and a second end (16), the first end (15) and the second end (16) being connected to the lower suspension part (4) and the connecting part (8) connects the second spring rod (14) and the pivot axis (5).

6. Vehicle seat (1) according to claim 5,
**characterised in that**
the first end (13) of the first spring rod (6) and the first end (13) of the second spring rod (14) have a first distance (17) to each other and the second end of the first spring rod (13) and the second end (16) of the second spring rod (14) have a second distance (18) to each other, wherein the first distance (17) is smaller than the second distance (18).

7. Vehicle seat (1) according to any of claims 1-6,
**characterised in that**
the connecting part (8) has a rocker-like structure (21), wherein a first rocker element (19) is arranged at a first end (22) of the rocker-like structure (21) and a second rocker element (20) is arranged at a second end (23) of the rocker-like structure (21), wherein the first rocker element (19) and the second rocker element (20) are in operative contact with the upper part (3).

8. Vehicle seat (1) according to claim 7,
**characterised in that**
the first rocker element (19) and the second rocker element (20) each have a first region (24), which is trapezoidal in cross-section, and a second region (25), which is rectangular in cross-section.

9. Vehicle seat (1) according to any of claims 1-8,
**characterised in that**
the vehicle seat (1) comprises a longitudinal horizontal suspension (26), wherein the longitudinal horizontal suspension (26)is arranged below the suspension device (2) seen in a vehicle seat height direction (H).

10. Vehicle seat (1) according to any of claims 1-9,
**characterised in that**
the vehicle seat (1) has a damping device (27) with at least one damper (30) which is pivotally connected to the lower part (4) at a first end (31) and to the upper part (3) at a second end (32).

11. Vehicle seat (1) according to claim 10,
**characterised in that**
at least one first lever element (28) is provided which is pivotally connected at a first end to the lower part (4) and pivotally connected at a second end to the second end of the damper (32), and that at least one second lever element (29) is provided which is pivotally connected to the first lever element (28).

12. Vehicle seat (1) according to any of the preceding claims,
**characterised in that**
the first spring rod (6) and the pivot axis (5) are arranged in a common plane (7).

## Revendications

1. Siège de véhicule (1) comportant un dispositif à ressort (2) pour l'amortissement de mouvements de pivotement d'une partie supérieure (3) du siège de véhicule (1) par rapport à une partie inférieure (4) du siège de véhicule (1) autour d'un axe de pivotement (5) disposé s'étendant dans une direction longitudinale (L) du siège de véhicule ou une direction de la largeur (B) du siège de véhicule,
**caractérisé par le fait que**
le dispositif à ressort (2) présente une première tige à ressort (6) élastiquement déformable en direction transversale et une partie de liaison (8) apte à pivoter autour de l'axe de pivotement (5) relie la première tige à ressort (6) et l'axe de pivotement (5) afin de déformer élastiquement la première tige à ressort (6) lors d'un pivotement de la partie supérieure (3).

2. Siège de véhicule (1) selon la revendication 1,
**caractérisé par le fait que**
l'axe de pivotement (5) est, de préférence, conçu en tant qu'axe de palier et l'axe de pivotement (5) présente une première extrémité (10) et une seconde extrémité (11), la première extrémité (10) et la seconde extrémité (11) étant reliées de façon pivotante à la partie inférieure (4) du siège de véhicule.

3. Siège de véhicule (1) selon l'une des revendications 1 ou 2,
**caractérisé par le fait que**
la première tige à ressort (6) présente une première extrémité (12) et une seconde extrémité (13), la première extrémité (12) et la seconde extrémité (13) étant reliées à la partie inférieure (4) du siège de véhicule.

4. Siège de véhicule (1) selon l'une des revendications 1 à 3,
**caractérisé par le fait que**
la partie de liaison (8) est reliée à l'axe de pivotement (5) de telle sorte que, lors d'une rotation de l'axe de pivotement (5), la partie de liaison (8) est déplaçable le long de l'axe de pivotement (5).

5. Siège de véhicule (1) selon l'une des revendications 1 à 4,
**caractérisé par le fait que**
le dispositif à ressort (2) comporte une seconde tige à ressort (14) déformable en direction transversale, laquelle présente une première extrémité (15) et une seconde extrémité (16), la première extrémité (15) et la seconde extrémité (16) étant reliées à la partie inférieure (4) du siège de véhicule et la partie de liaison (8) reliant la seconde tige à ressort (14) et l'axe de pivotement (5).

6. Siège de véhicule (1) selon la revendication 5,
**caractérisé par le fait que**
la première extrémité (13) de la première tige à ressort (6) et la première extrémité (13) de la seconde tige à ressort (14) présentent une première distance (17) l'une par rapport à l'autre et la seconde extrémité de la première tige à ressort (13) et la seconde extrémité (16) de la seconde tige à ressort (14) présentent une seconde distance (18) l'une par rapport à l'autre, la première distance (17) étant plus petite que la seconde distance (18).

7. Siège de véhicule (1) selon l'une des revendications 1 à 6,
**caractérisé par le fait que**
la partie de liaison (8) présente une structure (21) de type à bascule, un premier élément basculant (19) étant disposé à une première extrémité (22) de la structure (21) de type à bascule et un second élément basculant (20) étant disposé à une seconde extrémité (23) de la structure (21) de type à bascule, le premier élément basculant (19) et le second élément basculant (20) étant en contact fonctionnel avec la partie supérieure (3).

8. Siège de véhicule (1) selon la revendication 7,
**caractérisé par le fait que**
le premier élément basculant (19) et le second élément basculant (20) présentent chacun une première région (24), laquelle est conçue de forme trapézoïdale en section transversale, et une seconde région (25), laquelle est conçue rectangulaire en section transversale.

9. Siège de véhicule (1) selon l'une des revendications 1 à 8,
**caractérisé par le fait que**
le siège de véhicule (1) comporte une suspension horizontale longitudinale (26), la suspension horizontale longitudinale (26) étant disposée au-dessous du dispositif à ressort (2) lorsqu'elle est vue dans une direction de la hauteur (H) du siège de véhicule.

10. Siège de véhicule (1) selon l'une des revendications 1 à 9,
**caractérisé par le fait que**
le siège de véhicule (1) présente un dispositif d'amortissement (27) ayant au moins un amortisseur (30), lequel est relié de façon pivotante à la partie inférieure (4) par une première extrémité (31) et à la partie supérieure (3) par une seconde extrémité (32).

11. Siège de véhicule (1) selon la revendication 10,
**caractérisé par le fait qu'**
au moins un premier élément levier (28) est prévu, lequel est relié par une première extrémité de façon pivotante à la partie inférieure (4) et par une seconde extrémité de façon pivotante à la seconde extrémité de l'amortisseur (32), et **par le fait qu'**au moins un deuxième élément levier (29) est prévu, lequel est relié de façon pivotante au premier élément levier (28).

12. Siège de véhicule (1) selon l'une des revendications précédentes,
**caractérisé par le fait que**
la première tige à ressort (6) et l'axe de pivotement (5) sont disposés dans un plan commun (7).
